(19) Europäisches Patentamt / European Patent Office / Office européen des brevets

(11) **EP 1 868 827 B1**

(12) # EUROPÄISCHE PATENTSCHRIFT

(45) Veröffentlichungstag und Bekanntmachung des Hinweises auf die Patenterteilung:
**29.09.2010 Patentblatt 2010/39**

(21) Anmeldenummer: **06723773.5**

(22) Anmeldetag: **28.03.2006**

(51) Int Cl.:
**B60G 17/019** (2006.01)   **G01D 5/20** (2006.01)
**G01B 7/02** (2006.01)

(86) Internationale Anmeldenummer:
**PCT/EP2006/002801**

(87) Internationale Veröffentlichungsnummer:
**WO 2006/105894 (12.10.2006 Gazette 2006/41)**

(54) **NIVEAUREGULIERUNGSVORRICHTUNG EINES FAHRZEUGS**

RIDE LEVEL CONTROL DEVICE OF A VEHICLE

DISPOSITIF DE REGULATION DE NIVEAU D'UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.04.2005 DE 102005015285**

(43) Veröffentlichungstag der Anmeldung:
**26.12.2007 Patentblatt 2007/52**

(73) Patentinhaber: **KNORR-BREMSE Systeme für Nutzfahrzeuge GmbH**
**80809 München (DE)**

(72) Erfinder:
• **HECKER, Falk**
**71706 Markgröningen (DE)**
• **GÜCKER, Ulrich**
**71701 Schwieberdingen (DE)**

(74) Vertreter: **Schönmann, Kurt**
**Knorr-Bremse AG**
**Moosacher Strasse 80**
**80809 München (DE)**

(56) Entgegenhaltungen:
EP-A- 0 213 267          WO-A-95/08751
GB-A- 2 317 958          US-A- 4 290 044
US-A- 5 742 161          US-A1- 2002 074 995
US-B1- 6 198 397         US-B1- 6 445 178

• PATENT ABSTRACTS OF JAPAN Bd. 2000, Nr. 25, 12. April 2001 (2001-04-12) -& JP 2001 235307 A (GOTO TADATOSHI), 31. August 2001 (2001-08-31)
• PATENT ABSTRACTS OF JAPAN Bd. 008, Nr. 133 (P-281), 20. Juni 1984 (1984-06-20) & JP 59 035106 A (NISSAN JIDOSHA KK), 25. Februar 1984 (1984-02-25)
• PATENT ABSTRACTS OF JAPAN Bd. 002, Nr. 087 (M-027), 15. Juli 1978 (1978-07-15) -& JP 53 055820 A (HONDA MOTOR CO LTD), 20. Mai 1978 (1978-05-20)

EP 1 868 827 B1

**Beschreibung**

Stand der Technik

Die Erfindung geht aus von einer Niveauregulierungsvorrichtung eines Fahrzeugs gemäß dem Oberbegriff von Anspruch 1.

Aus der EP 0 213 267 A2 ist eine Niveauregulierungsvorrichtung bekannt, mit einem Wegsensor mit einer Spule, einem relativ zur Spule bewegbar angeordneten Kern sowie mit einer Betätigungseinrichtung für den Kern, mittels welcher der Kern in Abhängigkeit von der Drehbewegung einer Welle in Richtung seiner Längsachse bewegt wird. Als Betätigungseinrichtung für den Kern dient ein Kurbeltrieb, welcher einerseits mit der Welle und andererseits mit dem Kern in Wirkverbindung steht. Der Kern ist über eine Achse mit einem als Pleuel dienenden Hebel des Kurbeltriebs gelenkig verbunden. Die Achse ist in einem koaxial zum Kern angeordneten Führungsteil gelagert. Nachteilig bei dieser Anordnung ist jedoch, dass sie relativ viele Bauteile aufweist und daher kostspielig zu fertigen ist.

In der WO 95/08751 A wird ein Drehwinkelsensor beschrieben, bei welchem ein stationärer Hallsensor mit einem drehgetriebenen, exzentrischen Nocken aus magnetischem Material zusammen wirkt.

In den PATENT ABSTRACTS OF JAPAN Bd. 2000, Nr.25, 12.April 2001 (2001-04-12) & JP 2001 235307 A) wird ein Drehwinkelsensor beschrieben, bei welchem Spulen auf einem stationären Träger angeordnet sind, welche mit einem exzentrischen, ein magnetoresistives Element tragenden Rotor zusammen wirken.

Eine gattungsgemäße Niveauregulierungsvorrichtung wird in der US 2002/074995 A1 beschrieben.

Der Erfindung liegt demgegenüber die Aufgabe zugrunde, eine Niveauregulierungsvorrichtung derart weiter zu bilden, dass deren Drehwinkelsensor eine höhere Genauigkeit und Empfindlichkeit aufweist und darüber hinaus kompakt baut.

Erfindungsgemäß wird diese Aufgabe durch die Merkmale des Patentanspruchs 1 gelöst.

Offenbarung der Erfindung

Der Gegenstand von Anspruch 1 basiert zunächst auf dem Gedanken, den Spulenkern nicht relativ zur Spule längsverschieblich anzuordnen, sondern ihn stationär, d.h. fest in Bezug zur Spule anzuordnen. Eine Änderung der Induktivität der Spule als Maß für eine Änderung des Abstands zwischen einem Fahrzeugchassis und einer Fahrzeugachse oder einem Fahrzeugrad wird dann dadurch erzielt, dass der exzentrische Körper aus einem ferromagnetischem Material gefertigt und zumindest teilweise von den Feldlinien des Magnetfelds der Spule derart erfasst wird, dass alleine durch eine Änderung seiner Lage relativ zum Spulenkern die Änderung der Induktivität der Spule hervorgerufen wird. Dann kann auf eine aufwendigen Kurbeltrieb sowie eine Längsverschieblichkeit des Spulenkerns relativ zur Spule verzichtet werden, denn die Änderung der Induktivität rührt alleine aus der Relativbewegung des exzentrischen Körpers relativ zur Spule. Mit anderen Worten wird das Volumen des Spulenkerns durch den getrennt von ihm drehbeweglich angeordneten exzentrischen Körper erweitert oder reduziert, mithin ist der exzentrische Körper gegenüber dem Spulenkern derart verschwenkbar, dass er abhängig von seiner Drehlage mit einem unterschiedlichen Anteil seines Volumens vom Magnetfeld erfasst wird. Um eine für eine Messung ausreichende Empfindlichkeit und Linearität zu erhalten, bildet eine Voraussetzung, dass der exzentrische Körper in ausreichendem Maße von den Feldlinien des Magnetfelds erfasst wird, was der Fachmann durch eine geeignete Anpassung der Geometrien und Abstände festlegt.

Zum zumindest teilweisen Eintauchen des exzentrischen Körpers in eine Spulenöffnung ist die zum exzentrischen Körper weisende Fläche des Spulenkerns bezüglich einer Stirnfläche der Spule um ein Stück weit nach axial innen versetzt angeordnet.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt ist die Drehachse des exzentrischen Körpers in einer Ebene senkrecht zu einer Mittelachse des Spulenkerns angeordnet, wobei der exzentrische Körper wenigstens eine in einer die Mittelachse des Spulenkerns beinhaltenden Ebene verschwenkbare Platte beinhaltet.

Zeichnungen

Ein Ausführungsbeispiel der Erfindung ist in der Zeichnung dargestellt und in der nachfolgenden Beschreibung näher erläutert. In der Zeichnung zeigt:

Fig.1     eine Querschnittsdarstellung eines Drehwinkelsensors einer Niveauregulierungsvorrichtung eines Nutzfahrzeugs gemäß einer bevorzugten Ausführungsform der Erfindung;

Fig.2     eine Querschnittsdarstellung eines nicht Erfindungsgemäß Drehwinkelsensors einer Niveauregulierungsvorrichtung eines Nutzfahrzeugs.

Beschreibung des Ausführungsbeispiels

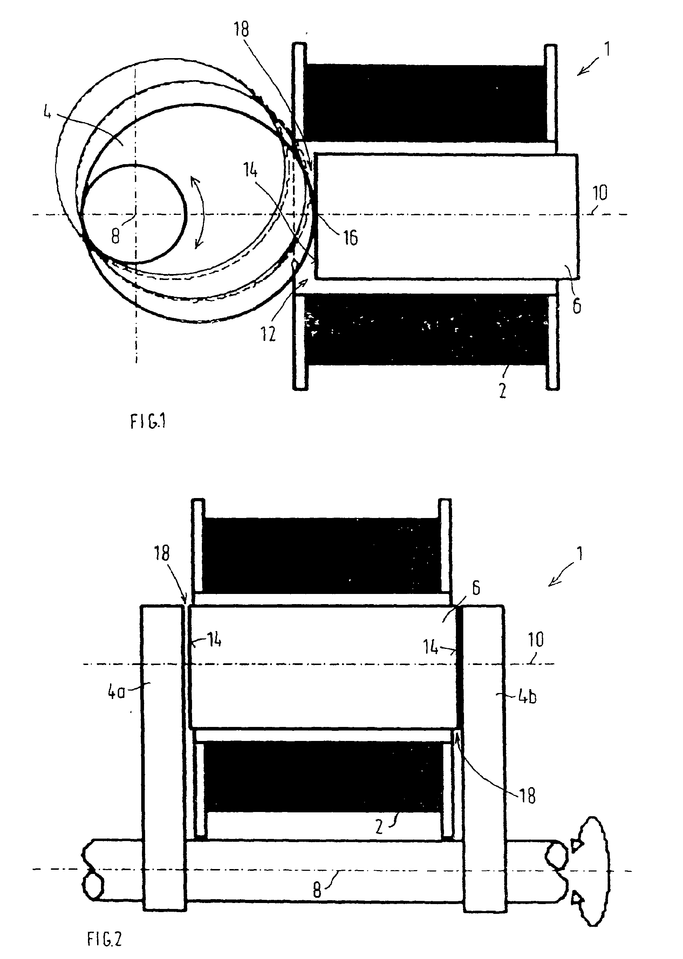

In Fig.1 ist ein Ausführungsbeispiel eines Drehwinkelsensors 1 einer Niveauregulierungsvorrichtung eines Nutzfahrzeugs gemäß der Erfindung gezeigt.

Das Messprinzip beruht dabei auf der Messung der Änderung der Induktivität einer elektrischen Spule 2 durch das Einbringen eines exzentrischen Körpers 4 in die Feldlinien des von ihr erzeugten magnetischen Feldes.

Die Induktivität einer solchen Spule 2 berechnet sich nach Gleichung (1) wie folgt :

$$L = \frac{N^2 \cdot \mu \cdot A}{s} \qquad (1)$$

wobei

N die Windungszahl der Spule,

s die Weglänge der magnetischen Feldlinien,

A die von den magnetischen Feldlinien durchsetzte Fläche,

μ die Permeabilität des Materials des Spulenkerns ist.

Die Induktivität kann daher durch das Einbringen von Materialien unterschiedlicher Permeabilität in den magnetischen Kreis verändert werden. Die Erfindung basiert zunächst auf dem Gedanken, den der Spule zugeordneten Spulenkern 6 stationär, d.h. fest in Bezug zur Spule 2 anzuordnen. Beispielsweise ist der Spulenkern 6 zylindrisch und besteht aus einem ferromagnetischen Material und ist von der Spule 2 zumindest teilweise umschlossen.

Eine Änderung der Induktivität der Spule 2 als Maß für eine Änderung des Abstands zwischen einem Fahrzeugchassis und einer Fahrzeugachse oder einem Fahrzeugrad wird dann dadurch erzielt, dass der getrennt vom Spulenkern 6 um eine Drehachse 8 drehbeweglich angeordnete exzentrische Körper 4 den Spulenkern 6 erweitert oder reduziert, indem er gegenüber dem Spulenkern 6 derart verschenkbar ist, dass er abhängig von seiner Drehlage mit einem unterschiedlichen Anteil seines Volumens vom Magnetfeld erfasst wird. Dies bedeutet, dass alleine durch eine Änderung seiner Lage relativ zum Spulenkern 6 eine Änderung der Induktivität der Spule als Maß für eine Änderung des Abstands hervorgerufen wird. Die Permeabilität von ferromagnetischen Materialien wie Eisen, Kobalt oder Nickel ist wesentlich größer als 1, so dass das magnetische Feld erheblich gestärkt wird, wenn ein solcher exzentrischer Körper 4 von den magnetischen Feldlinien erfasst wird.

Gemäß der in Fig.1 gezeigten Ausführungsform ist die Drehachse 8 des exzentrischen Körpers 4 in einer Ebene senkrecht zu einer Mittelachse 10 des Spulenkerns 6 oder der Spule 2 angeordnet, wobei der exzentrische Körper wenigstens eine in einer die Mittelachse 10 beinhaltenden Ebene verschwenkbare und beispielsweise kreisförmige Platte 4 beinhaltet. Die verschiedenen Schwenklagen der Platte 4 sind in Fig.1 dargestellt. Damit die Platte 4 zumindest teilweise in eine Spulenöffnung 12 der Spule 2 eintauchen kann, ist beispielsweise der Spulenkern 6 bezüglich einer Stirnfläche der Spule 2 um ein Stück weit nach axial innen versetzt angeordnet.

Gemäß Fig.2 kann die Drehachse 8 des exzentrischen Körpers 4a, 4b parallel zur Mittelachse 10 des Spulenkerns 6 oder der Spule 2 angeordnet sein, wobei der exzentrische Körper beispielsweise zwei, in Bezug zu den Stirnflächen 14 des Spulenkerns 6 in parallelen Ebenen verschwenkbare, ebenfalls kreisförmige Platten 4a, 4b beinhaltet, welche abhängig von ihrer Drehlage einen unterschiedlichen Überdeckungsgrad mit den Stirnflächen 14 des Spulenkerns 6 aufweisen, wie anhand von Fig.2 leicht vorstellbar ist. In diesem Fall ist also der Spulenkern 6 den beiden exzentrischen Platten 4a, 4b zwischengeordnet. Diese Ausführungsform bildet keinen Teil der beanspruchten Erfindung.

In jedem Fall soll zwischen dem exzentrischen Körper 4, 4a, 4b und dem Spulenkern 6 wenigstens ein derart großer Luftspalt verbleiben, dass der exzentrische Körper 4, 4a, 4b den Spulenkern 6 gerade nicht kontaktiert. Dies bedeutet für das Ausführungsbeispiel von Fig. 1, dass zwischen dem von der Drehachse 8 am weitesten entfernten Punkt 16 der kreisförmigen Platte 4 und der Stirnfläche 14 des Spulenkerns 6 noch um ein kleinen Luftspalt 18 entfernt ist, wenn dieser Punkt 16 in der gezeigten, mit einer durchgezogenen Linie dargestellten horizontalen Drehlage der Platte 4 einen minimalen Abstand vom Spulenkern 6 aufweist. Hingegen weisen die beiden den Spulenkern 6 einfassenden Platten 4a, 4b unabhängig von ihrer Drehlage stets einen geringen Abstand in Form eines kleinen Luftspalts 18 zu den gegenüberliegenden Stirnflächen 14 des Spulenkerns 6 auf.

**Bezugszahlenliste**

1 Drehwinkelsenor

2 Spule

4 exzentrischer Körper

6 Spulenkern

8 Drehachse

10 Mittelachse

12 Spulenöffnung

14 Stirnflächen

16 Punkt

18 Luftspalt

**Patentansprüche**

1. Niveauregulierungsvorrichtung eines Fahrzeugs, insbesondere eines Nutzfahrzeugs, beinhaltend einen Drehwinkelsensor (1) zur Messung des Abstands zwischen einem Fahrzeugchassis und einer Fahrzeugachse oder einem Fahrzeugrad nach induktivem Prinzip, mit einer elektrischen Spule (2) mit einem Spulenkern (6) zur Erzeugung eines magnetischen Feldes, sowie mit wenigstens einem Körper (4), welcher abhängig von dem Abstand um eine Drehachse (8) schwenkbar ist, wobei der Spulenkern (6) relativ zur Spule (2) stationär angeordnet ist, **dadurch gekennzeichnet, dass**

a) der Körper (4) ein exzentrischer Körper ist und aus einem ferromagnetischem Material besteht,

b) der exzentrische Körper (4) zumindest teilweise von den Feldlinien des Magnetfelds der Spule (2) derart erfasst wird, dass alleine durch eine Änderung seiner Lage relativ zum Spulenkern (6) eine Änderung der Induktivität der Spule (2) als Maß für eine Änderung des Abstands hervorgerufen wird,

c) der Spulenkern (6) zum zumindest teilweisen Eintauchen des exzentrischen Körpers (4) in eine Spulenöffnung (12) bezüglich einer Stirnfläche der Spule (2) um ein Stück weit nach axial innen versetzt angeordnet ist.

**2.** Niveauregulierungsvorrichtung nach Anspruch 1, **dadurch gekennzeichnet, dass** der exzentrische Körper (4) gegenüber dem Spulenkern (6) derart verschenkbar ist, dass er abhängig von seiner Drehlage mit einem unterschiedlichen Anteil seines Volumens vom Magnetfeld erfasst wird.

**3.** Niveauregulierungsvorrichtung nach Anspruch 1 oder 2, **dadurch gekennzeichnet, dass** zwischen dem exzentrischen Körper (4) und dem Spulenkern (6) wenigstens ein derart großer Luftspalt (18) verbleibt, dass der exzentrische Körper (4) den Spulenkern (6) gerade nicht kontaktiert.

**4.** Niveauregulierungsvorrichtung nach wenigstens einem der vorhergehenden Ansprüche, **dadurch gekennzeichnet, dass** die Drehachse (8) des exzentrischen Körpers (4) in einer Ebene senkrecht zu einer Mittelachse (10) des Spulenkerns (6) angeordnet ist.

**5.** Niveauregulierungsvorrichtung nach Anspruch 4, **dadurch gekennzeichnet, dass** der exzentrische Körper wenigstens eine in einer die Mittelachse (10) des Spulenkerns (6) beinhaltenden Ebene verschwenkbare Platte (4) beinhaltet.

## Claims

**1.** Ride level control device of a vehicle, in particular a commercial vehicle, comprising a sweep angle sensor (1) for measuring the distance between a vehicle body and a vehicle axle or a vehicle wheel in accordance with the inductive principle, an electric coil (2) including a coil core (6) for generating a magnetic field, as well as at least one body (4) that is pivotable as a function of the distance about an axis of rotation (8), with said coil core (6) being in stationary arrangement relative to said coil (2), **characterised in**

(a) **that** said body (4) is an eccentric body and consists of a ferromagnetic material,
(b) **that** said eccentric body (4) is covered, at least partly, by the field lines of the magnetic field of said coil (2) in such a way that by a mere change of its position relative to said coil core (6) a change of the inductance of said coil (2) is caused as a measure of a change of the distance,
(c) **that** said coil core (6) is disposed with an axially inward offset by a certain length for plunging, at least partly, said eccentric body (4) into a coil opening (12) relative to a face area of said coil (2).

**2.** Ride level control device according to Claim 1, **characterised in that** said eccentric body (4) is pivotable relative to said coil core (6) in such a manner that it will be covered by said magnetic field as a function of its position in rotation by a different fraction of its volume.

**3.** Ride level control device according to Claim 1 or 2, **characterised in that** at least one air gap (18) remains between said eccentric body (4) and said coil core (6), which is so wide that said eccentric body (4) will just not contact said coil core (6).

**4.** Ride level control device according to at least one of the preceding Claims, **characterised in that** the axis of rotation (8) of said eccentric body (4) is disposed in a plane normal on a centre axis (10) of said coil core (6).

**5.** Ride level control device according to Claim 4, **characterised in that** said eccentric body includes at least one plate (4) pivotable in a plane including the centre axis (10) of said coil core (6).

## Revendications

**1.** Dispositif de régulation du niveau d'un véhicule, en particulier d'un véhicule utilitaire, comprenant un détecteur de l'angle de rotation (1) à mesurer la distance entre un châssis du véhicule et un essieu du véhicule ou une roue du véhicule selon le principe d'induction, une self électrique (2) renfermant un noyau d'inductance (6) à engendrer un champ magnétique, ainsi qu'au moins un corps (4) pivotable en fonction de la distance autour d'un axe de rotation (8), audit noyau d'inductance (6) étant disposé en arrangement stationnaire relativement à ladite self (2), **caractérisé en ce**

(a) **que** ledit corps (4) est un corps excentrique et est formé d'un matériau ferromagnétique,
(b) **que** ledit corps excentrique (4) est couvert, au moins en partie, par les lignes de champ du champ magnétique de ladite self (2) d'une telle manière, que seule la variation de sa position relative audit noyau d'inductance (6) suffit afin de donner lieu à une variation de la résistance inductive de ladite self (2) en tant que mesure d'une variation de la distance,
(c) **que** ledit noyau d'inductance (6) est disposée à un déport axial vers l'intérieur par une longueur définie afin de plonger, au moins en partie, ledit corps excentrique (4) dans une ouverture de self (12) relativement à l'aire avant de ladite self (2).

**2.** Dispositif de régulation du niveau selon la revendication 1, **caractérisé en ce que** ledit corps excentrique (4) est pivotable relativement audit noyau d'inductance (6) d'une telle façon, qu'il soit couvert par ledit champ magnétique, en fonction de sa position rotative, par une partie différente de son volume.

**3.** Dispositif de régulation du niveau selon la revendication 1 or 2, **caractérisé en ce qu'**au moins une discontinuité magnétique (18) reste entre ledit corps excentrique (4) et ledit noyau d'inductance (6), qui présente une telle largeur, que ledit corps excentrique (4) justement n'entre pas en contact avec ledit noyau d'inductance (6).

**4.** Dispositif de régulation du niveau selon au moins une quelconque des revendications précédentes, **caractérisé en ce que** l'axe de rotation (8) dudit corps excentrique (4) est disposé dans un plan orthogonal sur une ligne médiane (10) dudit noyau d'inductance (6).

**5.** Dispositif de régulation du niveau selon la revendication 4, **caractérisé en ce que** ledit corps excentrique comprend au moins une plaque (4) pivotable dans un plan renfermant la ligne médiane (10) dudit noyau d'inductance (6).

FIG.1

FIG.2

6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0213267 A2
- WO 9508751 A
- JP 2001235307 A
- US 2002074995 A1

**In der Beschreibung aufgeführte Nicht-Patentliteratur**

- *PATENT ABSTRACTS OF JAPAN,* 12. April 2001, vol. 2000, 25